# FASCICULE DE BREVET EUROPEEN

(11) **EP 1 134 957 B1**
(45) Date de publication et mention de la délivrance du brevet: **05.03.2003**
(21) Numéro de dépôt: 01400677.9
(22) Date de dépôt: 14.03.2001
(51) Int. Cl.: H04M 1/60, H04B 1/38, H01R 27/00

(54) **Téléphone mobile muni d'un connecteur perfectionné**
Mobiltelefon ausgestattet mit verbessertem Steckverbinder
Mobile phone provided with improved plug connector

(30) Priorité: 14.03.2000 FR 0003272
(43) Date de publication de la demande: 19.09.2001
(73) Titulaire: SAGEM S.A., 75015 Paris (FR)
(72) Inventeur: Pham, Guillaume, 78700 Conflant St. Honorine (FR); Ben Matallah, M.Nordine, 95150 Taverny (FR); Chambon, François, 75017 Paris (FR)
(74) Mandataire: Schmit, Christian Norbert Marie

(56) Documents cités:
- EP-A- 0 606 996
- WO-A-00/11763
- WO-A-99/45685
- GB-A- 2 335 805
- US-A- 5 596 638

## Description

L'invention a pour objet un téléphone mobile muni d'un connecteur perfectionné. Le but de l'invention est de réduire les coûts de fabrication de tels téléphones mobiles. L'invention pourrait également servir pour des baladeurs, des dictaphones mobiles ou des micro-ordinateurs portables.

Dans le domaine de la téléphonie mobile, il a été ajouté une fonction de réception radiophonique sur certains téléphones mobiles. A cet effet un casque radiophonique avec deux écouteurs a été mis à disposition des utilisateurs. Ce casque est relié au téléphone mobile par un câble et dispose pour raccorder ce câble d'un connecteur mâle muni de trois pistes. Ce connecteur à trois pistes, appelé jack dans le langage courant, est destiné à distribuer un son stéréophonique dans les deux écouteurs du casque.

On connaît par ailleurs des téléphones mobiles dits mains libres. Avec de tels téléphones, un utilisateur peut par exemple manuellement transcrire sur un document des informations sonores qu'il reçoit. L'utilisateur n'est en effet pas obligé de tenir le téléphone mobile contre son oreille. Une fonction mains libres peut être réalisée par une amplification acoustique du signal audio délivré par le téléphone. Une telle utilisation présente trois inconvénients. Premièrement l'amplification du signal consomme de l'énergie électrique stockée en faible quantité dans le téléphone mobile. Deuxièmement elle provoque un effet Larsen car les sons diffusés par un haut-parleur puissant peuvent plus facilement exciter le microphone du téléphone mobile. Troisièmement la qualité sonore amplifiée n'est pas excellente.

Une autre solution de téléphone mains libres comporte la réalisation d'un deuxième émetteur récepteur radioélectrique dans le téléphone mobile. Ce deuxième équipement est accordé en fréquence avec un émetteur récepteur de casque léger, porté sur la tête de l'utilisateur. Une telle solution est délicate à mettre en oeuvre et est onéreuse.

Enfin il est également envisageable de mettre à disposition la fonction mains libres avec un casque, comme dans le cas de la réception radiophonique. Toutefois une telle solution nécessite de connecter un casque avec écouteurs mais surtout avec un microphone. Pour un tel ensemble casque avec écouteurs et microphone, le connecteur mâle doit avoir une piste supplémentaire pour le microphone. Dans ce cas, le connecteur mâle et le connecteur femelle doivent avoir quatre zones de contact chacun. Pour disposer en même temps de la fonction de diffusion radiophonique et de la fonction mains libres, les téléphones mobiles sont donc fabriqués avec deux connecteurs femelles distincts. Un premier connecteur femelle, disposant de trois palpeurs, est destiné au branchement d'un casque avec écouteurs pour la diffusion radiophonique. Et l'ensemble casque avec écouteurs et microphone est relié à un deuxième connecteur femelle, disposant de quatre palpeurs, du téléphone mobile pour la fonction mains libres. Dans certains cas un adaptateur peut être nécessaire pour relier l'ensemble casque avec écouteurs et microphone à un connecteur d'embase du téléphone mobile.

Il apparaît clairement un problème de coût lié à l'existence des deux connecteurs femelles. Le problème de coût est encore plus important si ces connecteurs femelles supplémentaires s'ajoutent au connecteur d'embase. Dans l'invention, pour remédier à ce problème, on remplace les deux connecteurs femelles destinés à recevoir un casque ou l'autre par un seul connecteur femelle perfectionné. Il est perfectionné en ce sens qu'il accepte des jacks à trois ou quatre pistes.

Le document WO 99/45685 concerne un sélecteur d'équipement audio permettant de détecter l'équipement audio qui est connecté à un dispositif de communication sans fil tel qu'un ordinateur portable ce document ne permet pas de résoudre le problème consistant à introduire, dans un même connecteur femelle, deux connecteurs mâles ayant un nombre de zones de contact différent.

Dans l'invention, le connecteur femelle perfectionné est réalisé de telle façon qu'il comporte des palpeurs électriques alignés et dont deux au moins sont longitudinalement resserrés. Soit un connecteur mâle engagé dans le connecteur femelle présente deux pistes en regard de ces deux palpeurs resserrés. Soit il n'en présente qu'une. Quand il n'en présente qu'une, un court-circuit entre les deux palpeurs résulte de cette piste unique et provoque un état électrique révélateur du type de connecteur mâle introduit. On se sert de cet état électrique pour admettre sur les palpeurs des signaux électriques correspondant au type de casque utilisé.

L'invention concerne donc un téléphone mobile comportant un premier et un deuxième circuit de diffusion de son, le deuxième circuit comportant un connecteur femelle pour recevoir un connecteur mâle à insertion cylindrique, le connecteur femelle comportant N palpeurs, au moins deux palpeurs voisins de ces N palpeurs étant situés dans une première zone, caractérisé en ce qu'un encombrement de cette première zone est égal à un encombrement d'une autre zone pour un autre palpeur.

L'invention sera mieux comprise à la lecture de la description qui suit et à l'examen des figures qui l'accompagnent. Celles-ci ne sont présentées qu'à titre indicatif et nullement limitatif de l'invention. Les figures montrent :
Figure 1 : une représentation schématique d'un téléphone mobile selon l'invention;
Figure 2 : un programme mis en oeuvre dans le téléphone mobile de l'invention pour la gestion des appels et la diffusion sonore lors du branchement d'un casque.

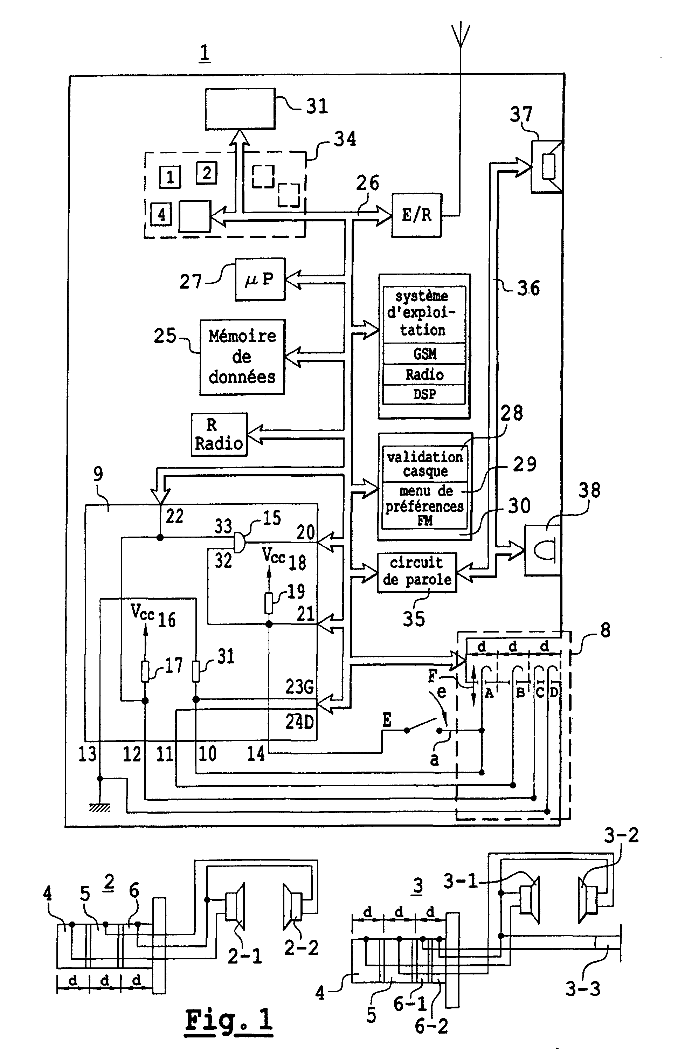

La figure 1 montre un téléphone mobile 1 conforme à l'invention. Ce téléphone 1 est muni de deux circuits de diffusion du son. Un premier circuit est classique et comporte des haut-parleurs et un microphone incorporés à un boîtier du téléphone mobile. Un deuxième circuit de diffusion du son comporte des haut-parleurs et ou un microphone utilisables notamment pour une écoute radiophonique ou une écoute mains libres. A cet effet le téléphone mobile 1 peut accepter un casque 2 avec écouteurs pour la diffusion radiophonique ou un casque 3 avec écouteurs et microphone. Ces casques 2 et 3 sont munis chacun d'un câble de transmission terminé par un connecteur mâle, respectivement muni de trois et quatre pistes.

Dans ce cas le nombre N de pistes du connecteur pour une écoute mains libres vaut quatre. Dans un cas où N vaut trois, on n'aura pour l'écoute mains libres qu'un seul écouteur, ou bien une écoute monophonique.

Des pistes 4 à 6 ou 4 à 6.1 et 6.2 de chaque connecteur sont alignées les unes à la suite des autres de manière cylindrique. Les pistes 4 et 5 sont reliées respectivement à une borne d'un écouteur gauche 2.1 et à une borne d'un écouteur droit 2.2 pour le casque 2. Elles sont reliées à une borne d'un écouteur gauche 3.1 et à une borne d'un écouteur droit 3.2 pour le casque 3. Le connecteur mâle du casque 2 a une piste 6 reliée en commun aux autres bornes des écouteurs 2.1 et 2.2. Le connecteur mâle du casque 3 dispose aussi d'une piste 6.2 reliée en commun aux autres bornes des écouteurs 3.1 et 3.2 ainsi qu'à une première borne d'un microphone 3.3. Le connecteur mâle du casque 3 a par ailleurs une quatrième piste supplémentaire 6.1 reliée à une deuxième borne du microphone 3.3.

Dans le connecteur du casque 2, les pistes 4 à 6 déterminent une première catégorie de zones qui se déploient avec un égal encombrement. Cet encombrement a une longueur d, mesurée dans le sens de l'insertion du connecteur mâle dans un connecteur femelle 8 du téléphone 1. L'encombrement des zones occupées par les pistes 4 et 5 du casque 3 est identique à celui de la première catégorie. En revanche, l'encombrement de la zone déterminée par les pistes 6.1 et 6.2, ensemble, du casque 3 est égal à celui de la première catégorie. En tenant compte d'un écart minimum d'isolation électrique entre les pistes, l'encombrement de chacune des pistes 6.1 et 6.2 est de l'ordre de d/2.

Les pistes des connecteurs mâles des casques 2 et 3 sont destinées à venir en contact avec des palpeurs A, B, C et D du connecteur femelle 8 du téléphone mobile 1.

Le premier circuit de diffusion du son se compose d'un haut-parleur 37 et d'un microphone 38. Ce haut-parleur 37 et ce microphone 38 sont reliés à un circuit de parole 35 grâce à un bus 36. Le deuxième circuit de diffusion du son est pour sa part composé du casque 2 ou du casque 3. II est relié à un circuit de décodage 9. Le circuit 9 permet de déterminer la nature du casque introduit et d'appliquer sur les palpeurs A à D des signaux correspondants. Un premier circuit de production du son est composé d'un émetteur récepteur ER de téléphonie mobile relié au bus 26. Un deuxième circuit de production du son est composé d'un récepteur radiophonique Radio également relié au bus 26. Les deux circuits peuvent ainsi être mis en relation avec l'un ou l'autre des premier ou deuxième circuits de diffusion du son. Une mémoire programme comportant un système d'exploitation, un programme général de téléphonie mobile (GSM) et des programmes de commande d'équipement radioélectrique et de traitement du signal (DSP) permet le fonctionnement du téléphone mobile 1 en téléphone mobile ou en récepteur radiophonique.

Les pistes 4 et 5 des connecteurs mâles sont mises en contact respectivement avec les palpeurs A et B. La piste 6 du casque 2 est mise au contact avec les palpeurs C et D et court-circuite ainsi ces deux palpeurs. Les pistes 6.1 et 6.2 du casque 3 sont connectées respectivement avec les palpeurs C et D. Les palpeurs A, B, C, D du connecteur femelle 8 sont reliés par des connexions électriques respectivement aux entrées 10, 11, 12, et 13 du circuit de décodage 9.

Le circuit 9 comporte une autre entrée 14 : une connexion reliée à un interrupteur E. Le palpeur A est électriquement relié à une borne de l'interrupteur E. L'interrupteur E est un interrupteur à enfoncement. Quand un connecteur mâle est présent dans le connecteur 8, le palpeur A s'enfonce (flèche F) et provoque le détachement d'une lame borne a de l'interrupteur E d'un palpeur e jouant le rôle de deuxième borne de l'interrupteur E. Lorsque le connecteur mâle est retiré, par effet élastique, la lame a revient au contact du palpeur e.

Le palpeur A permet la circulation des signaux électriques relatifs à l'écouteur gauche. Le palpeur B permet la circulation des signaux électriques relatifs à l'écouteur droit. Le palpeur C permet la circulation des signaux électriques relatifs au microphone. Le palpeur D est pour sa part relié à la masse et délivre une tension de référence pour les trois autres signaux. L'entrée 13 sert aussi de voie de retour au signaux ci-dessus.

Le circuit 9 comporte une porte ET 15. Une tension de polarisation, par exemple Vcc, est injectée à des noeuds 16 et 18 du circuit 9 par l'intermédiaire d'une résistance 17, de 1 kΩ dans un exemple, et par l'intermédiaire d'une résistance 19, de 1 MΩ dans un exemple. Les autres bornes des résistances 17 et 19 sont respectivement reliées aux entrées 12 et 14. Le circuit 9 comporte également une résistance 9.1, de 1kΩ dans un exemple, reliée à l'entrée 13 sur une première borne et à l'entrée 10 correspondant au palpeur A par une deuxième borne. Des entrées 32 et 33 de la porte ET sont respectivement reliées à l'entrée 14 et à l'entrée 12 du circuit 9.

Les sorties du circuit de décodage sont les suivantes : une sortie 20 correspond à la sortie de la porte ET 15, une sortie 21 correspond à l'entrée 14, une sortie 22 correspond à l'entrée 12, une sortie 23 correspond à l'entrée 10 et une sortie 24 correspond à l'entrée 11.

Les signaux disponibles aux sorties 20 et 21 sont stockés dans une mémoire de données 25 par l'intermédiaire du bus 26. Toutes les sorties 20 à 24 sont reliées au bus 26. Avant toute opération, un microprocesseur 27 consulte dans la mémoire de données 25 l'état de la tension en e disponible à la sortie 21 du circuit 9.

Lors du branchement d'un casque, différents événements se produisent. Tout d'abord le palpeur A ouvre l'interrupteur E. Le palpeur e et la lame a sont alors électriquement isolés l'un de l'autre. La tension observée à l'entrée 14 de l'interrupteur E augmente alors vers une valeur proche de Vcc. On détecte dans ce cas un un logique à l'entrée 32 de la porte ET. Ce résultat est par ailleurs stocké dans la mémoire de données 25. Puis, selon le nombre de pistes du connecteur mâle, les palpeurs C et D sont court-circuités ou non. Si le connecteur mâle dispose de trois pistes alors les palpeurs C et D sont court-circuités. Le palpeur C est alors relié à la masse. On observe alors une chute brutale de tension en C. Les entrées 32 et 33 de la porte ET étant dans ce cas un et zéro, on obtient un zéro à la sortie 20. Ce résultat correspond à la connexion du casque 2. Si le connecteur mâle dispose de 4 pistes, les palpeurs C et D ne sont pas court-circuités. L'entrée 33 de la porte ET est alors tirée à un niveau logique un par la résistance 17 et on observe un un à la sortie 20. On se trouve dans le cas de la connexion du casque 3 muni d'un microphone.

Dans le cas où un casque n'a pas été branché, l'interrupteur E est fermé. Le palpeur e et la lame a sont en contact et sont donc liés électriquement. La tension observée à l'entrée 14 de l'interrupteur E est alors nulle et l'entrée 32 de la porte ET est égale à zéro.

Quel que soit le résultat obtenu à la sortie 20, il est stocké dans la mémoire de donnée 25. Indépendamment de ces niveaux logiques, le circuit de décodage 9 assure une fonction de transmission de signaux alternatifs. La mémorisation des états des sorties 20 et 21 permet ensuite d'utiliser les palpeurs A, B, C, et D pour acheminer les signaux analogiques utiles pour faire fonctionner le deuxième circuit de diffusion du son.

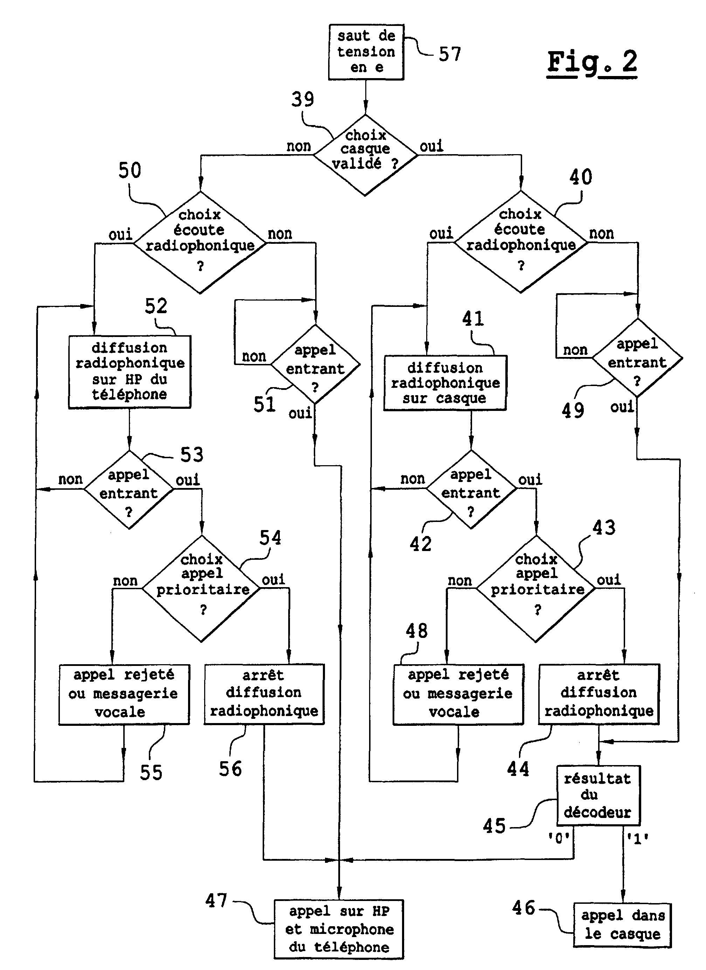

La figure 2 montre un traitement pouvant être appliqué par le téléphone mobile 1 pour gérer les appels, la diffusion radiophonique, et les branchements possibles des différents casques. Si au cours d'une étape 57 on constate une augmentation de la tension mesurée au point de contact e, un sous-programme 28 d'une mémoire programme 30 déclenche un affichage sur l'écran 31 d'une demande 39 de validation du branchement d'un casque. Un utilisateur peut alors, indépendamment de la présence réelle d'un casque, vouloir privilégier l'écoute avec le premier circuit de diffusion du son ou avec le deuxième circuit de diffusion du son. La validation s'effectue par un utilisateur grâce à un clavier de commandes 34 relié au bus 26. Un deuxième sous-programme 29 de la mémoire programme 30 entraîne alors l'affichage d'un menu de préférences pour le choix de la diffusion. Ce menu peut proposer notamment l'écoute radiophonique et la priorité aux appels entrant. Tous les choix établis par l'utilisateur sont stockés dans la mémoire de données 25. Le sous-programme 29 est représenté figure 2.

Plusieurs cas apparaissent. On effectue alors différents tests dans le sous-programme 29 pour imposer un fonctionnement en correspondance des possibilités de l'équipement et des souhaits de l'utilisateur. Un premier cas peut être celui où un changement d'état au point de contact e a été détecté (état 57), les options du branchement d'un casque et de l'écoute radiophonique peuvent avoir été sélectionnées et repérées grâce au test 39 et à des tests 40 ou 50. Dans ce premier cas une diffusion radiophonique 41 s'effectue dans le casque. Un appel entrant peut survenir. On effectue dans ce cas le test 42 récurrent. Si un appel entrant survient et si l'utilisateur a choisi une option 43 appels prioritaires, la diffusion radiophonique est arrêtée par une étape 44. On lance ensuite une étape 45. Au cours de l'étape 45, le microprocesseur 27 consulte grâce au bus 26 dans la mémoire de données 25 le résultat de la porte ET 15. Si le résultat est un, l'utilisateur a branché le casque 3 et l'appel entrant est dirigé dans ce casque 3. Sinon l'appel est orienté à l'étape 47 par l'intermédiaire du bus 26 vers le premier circuit de diffusion comportant un haut-parleur 37 et un microphone 38.

Lorsque les appels ne sont pas prioritaires, ils sont perdus ou orientés vers la messagerie vocale par l'étape 48 et la diffusion radiophonique n'est pas interrompue. On retourne à l'étape 41.

Si l'utilisateur a connecté un casque, a validé son choix, mais ne désire pas de diffusion radiophonique, alors les appels entrant sont orientés par l'étape 49 vers les différents circuits de diffusion suivant le résultat de la porte ET 15 déterminé à l'étape 45.

Dans un autre cas, un changement d'état de la tension au point de contact e a été détecté mais l'option du branchement d'un casque n'a pas été validée. Dans ce cas le sous-programme 29 de la mémoire programme 30 entraîne l'affichage du menu de préférences pour la diffusion radiophonique sur l'écran 31. Les choix établis par l'utilisateur au cours d'un test 50 sont stockés dans la mémoire de données 25. Au cours de ce test 50, l'utilisateur peut par exemple choisir de ne pas placer le téléphone mobile en écoute radiophonique. Pour les appels entrant, grâce au test 51, le téléphone mobile 1 fonctionne de manière classique. Dans le cas contraire une diffusion radiophonique selon l'étape 52, s'effectue sur le haut-parleur 37. On effectue ensuite des tests 53 et 54 similaires aux test 42 et 43. Lors de l'arrivée d'un appel entrant non prioritaire, la diffusion radiophonique n'est pas affectée et l'appel est perdu ou dirigé vers la messagerie vocale à une étape 55. Si l'appel est prioritaire, la diffusion radiophonique est arrêtée à une étape 56 et l'appel est orienté vers le haut-parleur 37 et le microphone 38 à une étape 47.

En définitive pour un appel entrant accepté, cet appel est orienté sur le casque 3 si celui-ci est présent, et si l'utilisateur l'a choisi. Autrement un appel entrant accepté est orienté sur le haut-parleur et le microphone du téléphone mobile.

## Revendications

1. Téléphone mobile (1) comportant un premier (35-38) et un deuxième (8) circuits de diffusion de son, le deuxième circuit comportant un connecteur femelle pour recevoir un connecteur mâle à insertion cylindrique, le connecteur femelle comportant plusieurs zones et N palpeurs (A-D), chaque zone comprenant au moins un palpeur, **caractérisé en ce que** au moins deux palpeurs voisins sont situés dans une première zone, cette première zone ayant un encombrement (d) identique à celui des autres zones.

2. Téléphone selon la revendication 1, **caractérisé en ce qu'**il comporte un casque (2) avec écouteurs muni d'un connecteur mâle avec au moins N-1 pistes dont une est destinée à se connecter aux palpeurs situés dans la première zone.

3. Téléphone selon l'une des revendications 1 à 2, **caractérisé en ce qu'**il comporte un casque 3 avec écouteurs et microphone muni de N pistes.

4. Téléphone selon l'une des revendications 1 à 3, **caractérisé en ce qu'**il comporte une mémoire programme (30) comportant un premier sous programme (28) pour orienter la diffusion du son sur le premier ou le deuxième circuit.

5. Téléphone selon l'une des revendications 1 à 4 **caractérisé en ce qu'**il comporte une mémoire programme (30) comportant un deuxième sous programme (29) pour orienter la diffusion du son sur le premier ou le deuxième circuit.

6. Téléphone selon la revendication 4 ou 5, **caractérisé en ce que** le sous programme (29) comportent un choix paramétrable par un menu utilisateur.

7. Téléphone selon l'une des revendications 1 à 6, **caractérisé en ce que** les N palpeurs sont reliés ensemble à un circuit de décodage (9).

8. Téléphone selon la revendication 7, **caractérisé en ce que** le circuit de décodage comporte une porte ET (15).

9. Téléphone selon la revendication 8, **caractérisé en ce que** le circuit de décodage comporte une sortie (20) pour un résultat d'une porte ET, une sortie (22) à relier au microphone et reliée à une première entrée de la porte ET, des sorties (23,24) à relier à des écouteurs et une sortie (21) donnant l'état d'une deuxième entrée de la porte ET, cette deuxième entrée étant reliée à un circuit de détection (E) de la présence d'un connecteur mâle dans le connecteur femelle.

10. Téléphone selon l'une des revendications 1 à 9, **caractérisé en ce que** le connecteur femelle comporte un palpeur (A) à deux positions mécaniques formant un interrupteur (E).

11. Téléphone selon l'une des revendications 1 à 10, **caractérisé en ce que** N égale 4.

## Patentansprüche

1. Mobiltelefon (1), das eine erste (35-38) und eine zweite (8) Tonverbreitungsschaltung aufweist, wobei die zweite Schaltung eine Steckerbuchse für die Aufnahme eines zylindrischen Einführungskontaktstiftes aufweist, wobei die Steckerbuchse mehrere Bereiche und N Taster (A-D) aufweist, wobei jeder Bereich mindestens einen Taster aufweist, **dadurch gekennzeichnet, daß** mindestens zwei benachbarte Taster in einem ersten Bereich angeordnet sind, wobei der erste Bereich einen identischen Platzbedarf (d) wie die anderen Bereiche hat.

2. Telefon nach Anspruch 1, **dadurch gekennzeichnet, daß** es eine Haube (2) mit Hörern aufweist, die ein Kontaktstift mit mindestens N-1 Spuren aufweist, wobei eine davon mit den in dem ersten Bereich gelegenen Tastern verbunden wird.

3. Telefon nach Anspruch 1 oder 2, **dadurch gekennzeichnet, daß** es eine Haube (3) mit Hörern und Mikrofon aufweist, die mit N Spuren ausgestattet ist.

4. Telefon nach einem der Ansprüche 1 bis 3, **dadurch gekennzeichnet, daß** es einen Programmspeicher (30) mit einem ersten Unterprogramm (28) aufweist, das den Ton auf die erste oder zweite Schaltung verteilt.

5. Telefon nach einem der Ansprüche 1 bis 4, **dadurch gekennzeichnet, daß** es einen Programmspeicher (30) mit einem zweiten Unterprogramm (29) aufweist, das den Ton auf die erste oder zweite Schaltung verteilt.

6. Telefon nach Anspruch 4 oder 5, **dadurch gekennzeichnet, daß** das Unterprogramm (29) eine Parameterauswahl durch ein Anwendermenü aufweist.

7. Telefon nach einem der Ansprüche 1 bis 6, **dadurch gekennzeichnet, daß** die N Taster gemeinsam an eine Decoderschaltung (9) angeschlossen sind.

8. Telefon nach Anspruch 7, **dadurch gekennzeichnet, daß** die Decoderschaltung ein UND-Gatter (15) aufweist.

9. Telefon nach Anspruch 8, **dadurch gekennzeichnet, daß** die Decoderschaltung einen Ausgang (20) für ein erstes Ergebnis eines UND-Gatters, einen Ausgang (22), der mit dem Mikrofon und einem ersten Eingang des UND-Gatters verbunden ist, Ausgänge (23, 24), die mit Hörern verbunden sind, und einen Ausgang (21) aufweist, der den Zustand des zweiten Eingangs des UND-Gatters liefert, wobei dieser zweite Eingang mit einer Detektorschaltung (E) für das Vorhandensein eines Kontaktstifts in der Steckerbuchse verbunden ist.

10. Telefon nach einem der Ansprüche 1 bis 9, **dadurch gekennzeichnet, daß** die Steckerbuchse einen Taster (A) mit zwei mechanischen Positionen aufweist, der einen Unterbrecher (E) bildet.

11. Telefon nach einem der Ansprüche 1 bis 10, **dadurch gekennzeichnet, daß** N gleich 4 ist.

## Claims

1. Mobile telephone (1) including a first (35 - 38) and a second (8) sound diffusion circuit, the second circuit including a female connector to receive a male connector with cylindrical insertion, the female connector including a plurality of zones and N probes (A - D), each zone including at least one probe, ***characterised by** the fact that* at least two adjacent probes are situated in a first zone, this first zone occupying a space (d) identical to that of the other zones.

2. Telephone according to claim 1, ***characterised by** the fact that* it includes headphones (2) with ear-pieces provided with a male connector with at least N - 1 tracks one of which is intended to connect to the probes situated in the first zone.

3. Telephone according to one of claims 1 to 2, ***characterised by** the fact that* it includes headphones 3 with ear-pieces and microphone provided with N tracks.

4. Telephone according to one of claims 1 to 3, ***characterised by** the fact that* it includes a program memory (30) including a first sub-program (28) to orient the sound diffusion on the first or the second circuit.

5. Telephone according to one of claims 1 to 4, ***characterised by** the fact that* it includes a program memory (30) including a second sub-program (29) to orient the sound diffusion on the first or the second circuit.

6. Telephone according to claim 4 or 5, ***characterised by** the fact that* the sub-program (29) includes a selection configurable through a user menu.

7. Telephone according to one of claims 1 to 6, ***characterised by** the fact that* the N probes are connected together to a decoding circuit (9).

8. Telephone according to claim 7, ***characterised by** the fact that* the decoding circuit includes an AND gate (15).

9. Telephone according to claim 8, ***characterised by** the fact that* the decoding circuit includes an output (20) for a result from an AND gate, an output (22) to connect to the microphone and connected to a first input of the AND gate, outputs (23, 24) to connect to ear-pieces and an output (21) giving the state of a second input of the AND gate, this second input being connected to a detection circuit (E) of the presence of a male connector in the female connector.

10. Telephone according to one of claims 1 to 9, ***characterised by** the fact that* the female connector includes a probe (A) with two mechanical positions forming a circuit-breaker (E).

11. Telephone according to one of claims 1 to 10, ***characterised by** the fact that* N is equal to 4.
